# EUROPEAN PATENT APPLICATION

(11) **EP 1 990 707 A1**
(43) Date of publication of application: **12.11.2008**
(21) Application number: 07107642.6
(22) Date of filing: 07.05.2007
(51) Int. Cl.: G06F 3/048, G06F 1/16

(54) **Dual function touch screen module for portable device and operating method therefor**

(71) Applicant: Giga-Byte Communications, Inc., Hsin-Tien Taipei County (TW); Giga-Byte Technology Co., Ltd., Hsin-Tien Taipei County (TW)
(72) Inventor: Huang, Jeng-Wen, TAIPEI (TW); Chang, Chih-Ming, TAIPEI COUNTY (TW); Wang, Tzu-Wei, TAIPEI COUNTY (TW)
(74) Representative: Loisel, Bertrand

(57) **Abstract**

A dual function operating touch screen module which applies to portable devices and operating method therefor are provided. The dual function operating touch screen module includes a touch screen, a sensor, an instruction executing unit, and a cursor transforming unit. The operating method includes the steps of displaying an image according to a touch signal input from a touch screen; receiving the touch signal to calculate a touch location signal; performing a corresponding operating instruction based on the touch location signal; and triggering and transforming the touch location signal to a cursor track signal which corresponds to the operating instruction, and display the cursor track signal on an output image signal after the output image signal is selectively activated actively or passively.

## Description

### BACKGROUND

### Field of the Invention

The invention relates to a touch screen, and more particularly, to a dual function operating touch screen which applies to a portable device and an operating method therefor.

### Related Art

Touch screen uses an electrical field imaging technology to form as a cursor or an interface for giving instruction, where with the help of embedded electrode or electrode underneath the screen, the movement of a touch pen or a finger on the screen can be detected. By the improvement of the touch screen technology, it has already been widely accepted in all kinds of devices.

For example, when an analog type touch screen which allows inputting successive coordinates is applied to computers, PDAs, cell phones and translator machines, instead of using keyboard for inputting or searching, users can just rely on their hand writing or clicking, so that the working efficiency can be greatly improved.

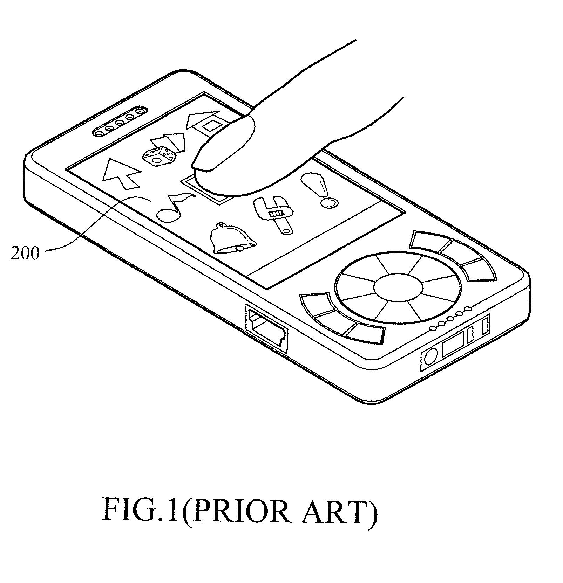

FIG.1 is a schematic diagram showing how a touch screen applies to a portable device in a traditional way by which a user can use his finger or a touch pen to click a function block on the touch screen 200. Up to the present, the development of the portable device is still moving toward miniaturization. Therefore, while functions of embodiment software are increased and added into a single portable device, how to perform multiple functions by just one physical device (an input interface or a display device) without connecting an extra input interface or an extra display device becomes an important topic.

### SUMMARY OF THE INVENTION

According to the abovementioned demands, a dual function operating touch screen module which applies to a portable device is provided, including: a touch screen, which provides an input interface for inputting a touch signal, and displays an image; a sensor, which receives the touch signal from the touch screen in order to calculate a touch location signal; an instruction executing unit, which performs a corresponding operating instruction based on the touch location signal; and a cursor transforming unit, which is used to trigger and transform the touch location signal to a cursor track signal which corresponds to the operating instruction, and displays the cursor track signal on an output image signal after the output image signal is selectively activated actively or passively by the cursor transforming unit.

A method of operating a dual function operating touch screen module which applies to a portable device is further provided, which includes the following steps: displaying an image according to a touch signal inputted from a touch screen; receiving the touch signal to calculate a touch location signal; performing a corresponding operating instruction based on the touch location signal; and triggering and transforming the touch location signal to a cursor track signal which corresponds to the operating instruction, and displaying the cursor track signal on an output image signal after the output image signal is selectively activated actively or passively by the cursor transforming unit.

The output image signal is outputted to an external display device. The active activation of the output image signal is through detecting an image signal interface. The passive activation of the output image signal is through a switch. The step of displaying the cursor track signal on the output image signal further includes a step of turning off the image of the touch screen.

### BRIEF DESCRIPTION OF THE DRAWINGS

The present invention will become more fully understood from the detailed description given below, which is for illustration only and thus is not limitative of the present invention, wherein:
FIG.1 is a diagram showing how a touch screen applies to a portable device in a traditional way;
FIG.2 shows the block diagrams of the dual function operating touch screen module which applies to a portable device according to the invention;
FIG.3 shows a diagram of the dual function operating touch screen which applies to a portable device according to the invention; and
FIG.4 is a flowchart showing a method of operating the dual function operating touch screen which applies to a portable device according to the invention.

### DETAILED DESCRIPTION

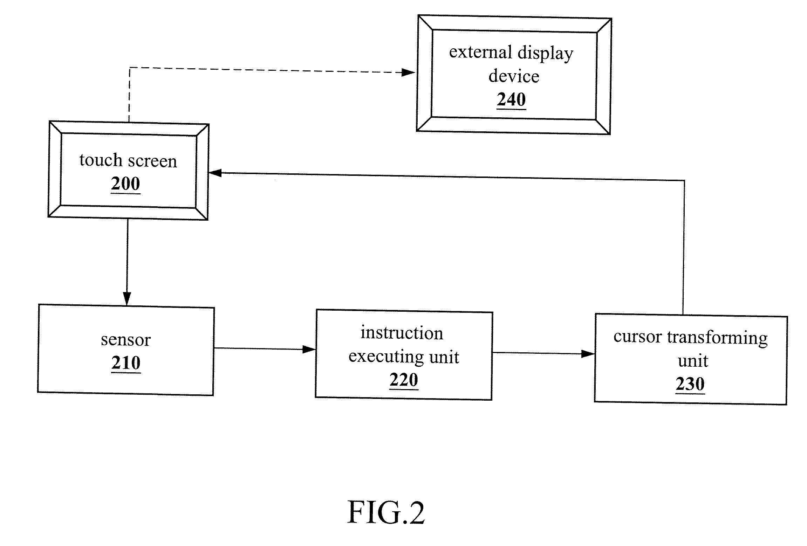

A dual function operating touch screen module which applies to a portable device is provided. FIG.2 shows a block diagram of the dual function operating touch screen module which applies to a portable device, including: a touch screen 200, which provides an input interface for inputting a touch signal, and displays an image; a sensor 210, which receives the touch signal from the touch screen 200 to calculate a touch location signal; an instruction executing unit 220, which performs a corresponding operating instruction based on the touch location signal; and a cursor transforming unit 230, which is used to trigger and transform the touch location signal to a cursor track signal which corresponds to the operating instruction, and displays the cursor track signal on an output image signal after the output image signal is selectively activated actively or passively by the cursor transforming unit 230. The output image signal is outputted to an external display device 240.

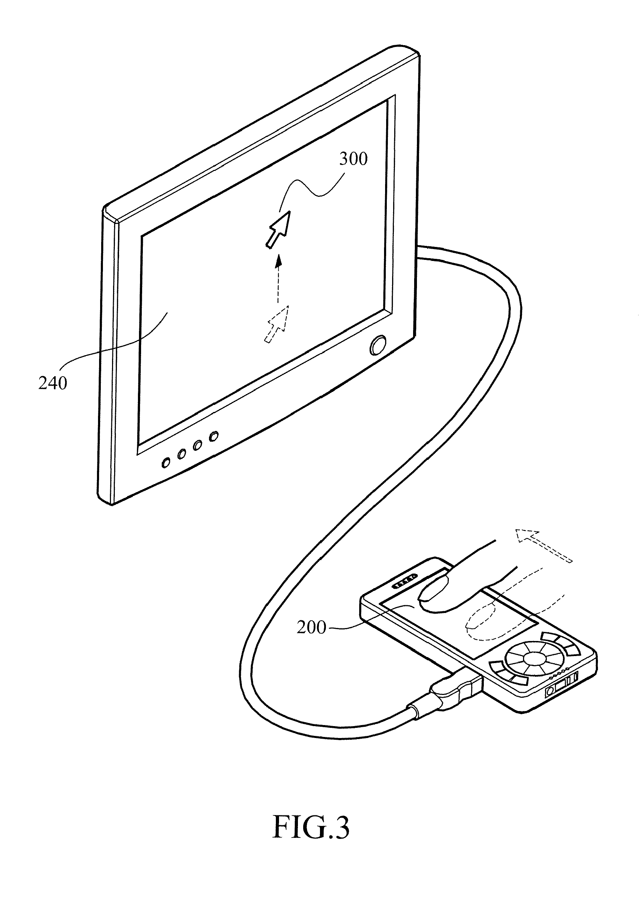

FIG.3 is a diagram which shows a dual function operating touch screen which applies to a portable device. When a user operates the portable device, a touch location signal will be triggered and transformed to a cursor track signal 300 after an output image signal is selectively activated actively or passively, then the cursor track signal 300 which corresponds to the operating instruction will be displayed on the output image signal. The output image signal is outputted to an external display device 240. In practice, a user can passively activate the output image signal by a switch or actively activate it by detecting an image signal interface and determining whether there is an external connecting cable to transmit the image signal.

Since the touch screen 200 doesn't provide a function similar to cursor when an output image signal is activated, the external display device 240 is designed to consider the visual feeling of the users in the embodiment of the present invention. Therefore, in the real applications, the user does not have to watch the image displayed from the touch screen 200; hence, based on the foregoing reasons and also in order to save power energy, the image of the touch screen 200 can be selectively turned off. At this time, except for keeping the detection function of the position change of a finger or a touch pen on the touch screen 200, the technical feature of the invention is to display the cursor track signal 300 on the output image signal (the external display device 240) that allows the user to have an input function similar to mouse by touching the touch screen 200 instead.

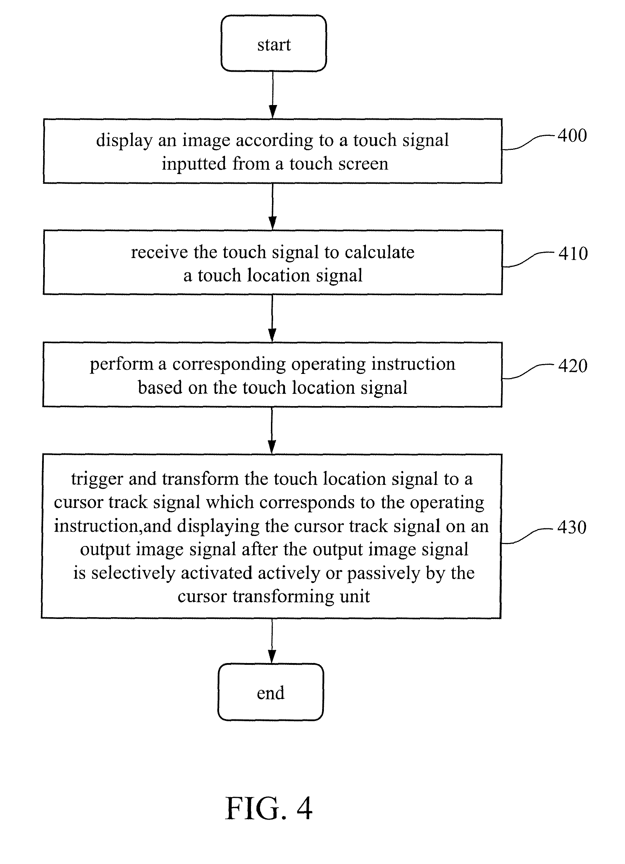

A method of operating a dual function operating touch screen module which applies to a portable device is further provided, which is shown in FIG.4 by a flowchart. The method includes the following steps: displaying an image according to a touch signal inputted from a touch screen (step 400); receiving the touch signal to calculate a touch location signal (step 410); performing a corresponding operating instruction based on the touch location signal (step 420); and triggering and transforming the touch location signal to a cursor track signal which corresponds to the operating instruction, and displaying the cursor track signal on an output image signal after the output image signal is selectively activated actively or passively by the cursor transforming unit. (step 430).

While the illustrative embodiments of the invention have been set forth for the purpose of disclosure, modifications of the disclosed embodiments of the invention as well as other embodiments therefor may occur to those skilled in the art. Accordingly, the appended claims are intended to cover all embodiments, which do not depart from the spirit and scope of the invention

## Claims

1. A dual function operating touch screen module applied to a portable device, including:
a touch screen, which provides an input interface for inputting a touch signal, and displays an image;
a sensor, which receives the touch signal from the touch screen to calculate a touch location signal;
an instruction executing unit, which performs a corresponding operating instruction based on the touch location signal; and
a cursor transforming unit, which triggers and transforms the touch location signal to a cursor track signal which corresponds to the operating instruction, and displays the cursor track signal on an output image signal after the output image signal is selectively activated actively or passively by the cursor transforming unit.

2. The module of claim 1, wherein the output image signal is outputted to an external display device.

3. The module of claim 1, wherein the active activation of the output image signal is through detecting an image signal interface.

4. The module of claim 1, where the passive activation of the output image signal is through a switch.

5. The module of claim 1, wherein the step of displaying the cursor track signal on the output image signal further includes a step of turning off the image of the touch screen.

6. A method of operating a dual function operating touch screen module on a portable device, including:
displaying an image according to a touch signal inputted from a touch screen;
receiving the touch signal to calculate a touch location signal;
performing a corresponding operating instruction based on the touch location signal; and
triggering and transforming the touch location signal to a cursor track signal which corresponds to the operating instruction, and displaying the cursor track signal on an output image signal after the output image signal is selectively activated actively or passively.

7. The method of claim 6, wherein the output image signal is outputted to an external display device.

8. The method of claim 6, wherein the active activation of the output image signal is through detecting an image signal interface.

9. The method of claim 6, where the passive activation of the output image signal is through a switch.

10. The method of claim 6, wherein the step of displaying the cursor track signal on the output image signal further includes a step of turning off the image of the touch screen.

## Amended claims

### Amended claims in accordance with Rule 137(2) EPC.

**1.** A method of operating a touch screen module on a portable device, including:
displaying an image according to a touch signal inputted from a touch screen (200);
receiving the touch signal to calculate a touch location signal;
performing a corresponding operating instruction based on the touch location signal; and
transforming the touch location signal to a cursor track signal (300) which corresponds to the operating instruction, and displaying the cursor track signal (300) on an output image signal after the output image signal is output to an external display device (240).

**2.** The method of claim 6, wherein an active activation of the output image signal is through detecting an image signal interface.

**3.** The method of claim 6, wherein a passive activation of the output image signal is through a switch.

**4.** The method of claim 6, wherein the step of displaying the cursor track signal on the output image signal further includes a step of turning off the image of the touch screen.
